# EUROPÄISCHE PATENTSCHRIFT

(11) **EP 2 057 303 B1**
(45) Veröffentlichungstag und Bekanntmachung des Hinweises auf die Patenterteilung: **23.05.2012**
(21) Anmeldenummer: 07729634.1
(22) Anmeldetag: 30.05.2007
(51) Int. Cl.: C23C 22/34, C23C 22/36, C23C 22/40, C23C 22/74, C09D 5/02, C09D 5/08, C09D 133/02, C09D 133/10, C09D 133/06, C09D 133/08, C09D 143/02, C09D 143/04

(54) **CHROMFREIES, THERMISCH HÄRTBARES KORROSIONSSCHUTZMITTEL**
CHROMIUM-FREE, THERMALLY CURABLE CORROSION PROTECTION COMPOSITION
AGENT ANTI-CORROSION THERMIQUEMENT DURCISSABLE EXEMPT DE CHROME

(30) Priorität: 24.08.2006 DE 102006039633
(43) Veröffentlichungstag der Anmeldung: 13.05.2009
(73) Patentinhaber: Henkel AG & Co. KGaA, 40589 Düsseldorf (DE)
(72) Erfinder: DE ZEEUW, Ard, 40627 Düsseldorf (DE); ROTH, Marcel, 40589 Düsseldorf (DE); SANDER, Jörg, 42549 Velbert (DE)
(86) Internationale Anmeldenummer: PCT/EP2007/055214
(87) Internationale Veröffentlichungsnummer: WO 2008/022819

(56) Entgegenhaltungen:
- WO-A-00/71626
- WO-A-2005/042801
- DE-A1- 19 636 077
- US-B1- 6 312 812
- SCHAUER THADEUS ET AL: "Corrosion protective pigments: Their efficiency in organic and waterborne primers" EUR COAT J; EUROPEAN COATINGS JOURNAL 1997 VINCENTZ VERLAG, HANNOVER, GERMANY, Nr. 3, 1997, Seiten 233-238, XP009088106

## Beschreibung

Die vorliegende Erfindung betrifft ein chromfreies organisch/anorganisches Korrosionsschutzmittel und ein Korrosionsschutzverfahren zur Behandlung von Oberflächen aus Stahl, die mit Zink oder Zinklegierungen oder mit Aluminium oder Aluminiumlegierungen beschichtet sind, sowie von Oberflächen aus Zink oder Zinklegierungen, Aluminium oder Aluminiumlegierungen. Es ist insbesondere geeignet zur Obenflächenbehandlung in Bandanlagen (coil-coating) zur Anwendung dieser Substrate im Haushalts- und Architekturbereich sowie in der Automobilindustrie.

Die WO 99/29927 beschreibt ein chromfreies wäßriges Korrosionsschutzmittel zur Behandlung von Oberflächen aus verzinktem oder legierungsverzinktem Stahl sowie aus Aluminium. Es enthält als wesentliche Komponenten HexafluoroAnionen des Titans und/oder Zircons, Vanadiumionen, Cobaltionen, Phosphorsäure sowie vorzugsweise zusätzlich einen organischen Filmbildner, insbesondere auf Polyacrylat-Basis. Dieses Korrosionsschutzmittel ist insbesondere zur Korrosionsschutzbehandlung von Metallbändern geeignet.

DE 199 23 048 (WO 00/71629) offenbart ein chromfreies Korrosionsschutzmittel, enthaltend Wasser und
a.) 0,5 bis 100 g/l Hexafluoroanionen des Titan (IV), Silicium (IV) und/oder Zircon (IV)
b.) 0 bis 100 g/l Phosphorsäure
c.) 0 bis 100 g/l einer oder mehrerer Verbindungen des Cobalts, Nickels, Vanadiums, Eisens, Mangans, Molybdäns oder Wolframs.
d.) 0,5 bis 30 Gew. % mindestens eines wasserlöslichen oder wasserdispersierbaren filmbildenden organischen Polymers oder Copolymers (bezogen auf Aktivsubstanz),
e.) 0,1 bis 10 Gew. % einer Organophosphonsäure
f.) ggf. weitere Hilfs- und Zusatzstoffe.

Ein weiterer Gegenstand des genannten Dokuments betrifft ein Verfahren zur korrosionsschützenden Behandlung von Stahl, der ggf. mit einer metallischen Beschichtung aus Zink, Aluminium, Kupfer, Nickel oder ähnlichen Metallen versehen ist, oder Aluminium oder dessen Legierungen, das die folgenden wesentlichen Verfahrensschritte beinhaltet:
a) die Oberfläche des Substrats wird für eine Zeitdauer zwischen 0,5 und 60 Sekunden bei einer Behandlungstemperatur zwischen 10 und 50°C, vorzugsweise 15 und 35°C mit einem Korrosionsschutzmittel der oben genannten Art in Kontakt gebracht; die Behandlungstemperatur kann durch Wärmezufuhr über das Werkstück oder die Behandlungslösung eingestellt werden,
b) das überschüssige Korrosionsschutzmittel wird ggf. von der Oberfläche entfernt und
c) durch geeignete Wärmezufuhr wird für einen Zeitraum von 1 bis 120 Sekunden erwärmt, wobei Peak-Metal-Temperaturen zwischen 50°C und 150°C erreicht werden sollen, wobei gleichzeitig eine Vernetzung des polymeren Films und seine Verankerung auf der Metalloberfläche stattfindet.

Die vorliegende Erfindung bildet den Stand der Technik weiter. Sie betrifft in ihrem ersten Aspekt ein chromfreies, härtbares Korrosionsschutzmittel zur Erstbeschichtung von metallischen Substraten , wie es in Anspruch 1 definiert ist. Ein entsprechendes Verfahren unter Verwendung des korrosionsschutzmittels ist in Anspruch 14 definiert. Bevorzugte Ausführungsformen finden sich in den Ansprüchen 2 bis 13 und 15.

Wenn hier von einer "Erstbeschichtung" die Rede ist, so bedeutet dies, dass das metallische Substrat vor dem Kontakt mit dem erfindungsgemäßen Korrosionsschutzmittel keiner weiteren Korrosionsschutzbehandlung unterzogen wurde. Vielmehr soll das erfindungsgemäße Korrosionsschutzmittel auf eine frisch erzeugte oder frisch gereinigte Metalloberfläche aufgetragen werden. Diese Behandlung stellt die erste bzw. die einzige Korrosionsschutzmaßnahme für das metallische Substrat dar. Dabei ist es durchaus möglich, auf das metallische Substrat nach dem Auftrag des erfindungsgemäßen Korrosionsschutzmittels weitere dekorative und/oder korrosionsschützende Beschichtungen wie beispielsweise übliche Tauch-, Spritz- oder Pulverlacke aufzubringen.

Die Fluorokomplexionen von Titan und/oder Zirkon stellen vorzugsweise Hexafluorokomplexionen dar. Diese kann man in Form der freien Säuren oder in Form ihrer im Korrosionsschutzmittel löslichen Salze einführen. Zur Einstellung des sauren pH-Werts ist es günstig, die Fluorokomplexionen als Hexafluorosäuren einzubringen. Die Fluorokomplexionen können auch im Mittel weniger als 6 Fluoratome pro Komplexmolekül aufweisen. Dies lässt sich beispielsweise dadurch erreichen, dass man zusätzlich zu Hexafluorokomplexionen weitere Verbindungen oder Salze mit Titan- und/oder Zirkonionen einsetzt, die im Stande sind, Fluorokomplexe zu bilden. Beispielsweise seien Oxidcarbonate oder Hydroxycarbonate genannt. Andererseits kann das Korrosionsschutzmittel einen über das Vorliegen von Hexafluorokomplexionen hinausgehenden Überschuss an freien Fluoridionen aufweisen, die beispielsweise in Form von Flusssäure eingebracht werden können.

Das Korrosionsschutzpigment b) ist vorzugsweise eine partikelförmige organische oder anorganische Verbindung, die durch Diffusionshemmung ("Barrierepigment") die Diffusion von Wasser und/oder anderen korrosiven Agentien durch die Beschichtung hemmt oder die antikorrosiv wirkende Moleküle oder Ionen abgeben kann. Vorzugsweise wird als Korrosionsschutzpigment eine Verbindung mit Kationenaustauscher-Eigenschaften verwendet. Besonders bevorzugt ist eine Verbindung, die durch Alkalimetallionen austauschbare Kationen 2- oder mehrwertiger Metalle enthält. Bevorzugte austauschbare Kationen sind die Kationen von Ca, Ce, Zn, Sr, La, Y, Al und Mg. Insbesondere sind Korrosionsschutzpigmente auf Basis von Silicaten mit Schicht- oder Raumnetzstruktur bevorzugt, die derartige austauschfähige Kationen enthalten. Beispielsweise kann das Korrosionsschutzpigment eine synthetische, amorphe Kieselsäure darstellen, die zumindest teilweise in Form ihres Salzes mit austauschfähigen Calciumionen vorliegt. Um mit der weiter unten genannten angestrebten Schichtdicke des ausgehärteten Korrosionsschutzmittels zu korrespondieren, liegt die mittlere Teilchengröße des Korrosionsschutzpigments (D50-Wert, beispielsweise bestimmbar durch Lichtstreumethoden) im Bereich von 0,5 bis 10 µm, insbesondere im Bereich von 1 bis 4 µm.

Das als Komponente c) auszuwählende organische Polymer hat die intrinsische Eigenschaft, in wässriger Lösung bei einer Konzentration von etwa 50 Gew.-% einen pH-Wert im Bereich von 1 bis 3, vorzugsweise im Bereich von 1,5 bis 2,5 und insbesondere im Bereich von 1,8 bis 2,2 aufzuweisen. Hierzu ist es erforderlich, dass das Polymer in wässriger Lösung sauer reagierende Gruppen trägt, die der Polymer-Lösung einen pH-Wert im genannten Bereich verleihen, ohne dass dieser pH-Wert durch Zugabe einer weiteren Säure eingestellt werden muss. Hierauf wird weiter unten näher eingegangen.

Die Anwesenheit der Komponente c) macht das Korrosionsschutzmittel "härtbar", d.h. sorgt dafür, dass sich das Korrosionsschutzmittel auf der Metalloberfläche verfestigt. Dieses Verfestigen kann rein physikalisch durch Abdampfen von Wasser und/oder Lösungsmittel geschehen (was als "Verfilmen" bezeichnet werden kann). Vorzugsweise beruht das Härten jedoch zumindest teilweise auf einer chemischen Reaktion ("Vernetzung"), bei der sich die Molmasse des Polymers c) erhöht. Beispiele solcher Reaktionen sind Polymerisierungsreaktionen, beispielsweise über C=C - Doppelbindungen, oder Kondensationsreaktionen. Diese Reaktionen können thermisch oder durch Einwirkung energiereicher Strahlung (z.B. Elektronenstrahlung, Gamma-Strahlung, UV- oder Lichtstrahlung) ausgelöst werden. Im Rahmen der vorliegenden Erfindung wird vorzugsweise ein thermisch und/oder durch Abdampfen von Wasser und/oder Lösungsmittel härtbares Polymer als Komponente c) eingesetzt. Die Wärmezufuhr kann über einen Wärmeträger (wie beispielsweise das vorgewärmte Substrat oder heiße Luft) oder durch Infrarot-Strahlung erfolgen.

Vorzugsweise enthält das Korrosionsschutzmittel Phosphationen als weitere Komponente d). Diese können in Form von Phosphorsäure und/oder in Form von deren Salzen eingebracht werden. Bei Einsatz von Phosphorsäure kann es erforderlich sein, den pH-Wert des Korrosionsschutzmittels durch Zugabe basischer Substanzen auf den gewünschten Bereich einzustellen. Dabei bietet es sich an, als basische Substanzen Oxide oder Carbonate der nachstehend genannten Metalle einzusetzen, sofern man die Anwesenheit der entsprechenden Metallionen wünscht. Unabhängig davon, in welcher Form man die Phosphationen einbringt, wird sich in dem Behandlungsmittel je nach dessen pH-Wert das entsprechende Gleichgewicht zwischen den unterschiedlich protolysierten Phosphationen-Spezies einstellen. Für die weiter unten folgenden quantitativen Angaben zur bevorzugten Zusammensetzung des Korrosionsschutzmittels wird vereinfachend angenommen, dass die Phosphationen in Form von Phoshorsäure vorliegen.

Weiterhin kann das erfindungsgemäße Korrosionsschutzmittel als zusätzliche Komponente e) Mangan- und/oder Magnesiumionen enthalten. Dabei wird die Anwesentheit von Manganionen bevorzugt. In diesem Fall können Magnesiumionen zusätzlich zu den Manganionen vorhanden sein, was sogar bevorzugt ist. Vorzugsweise bringt man diese Metallionen dadurch als Phosphate in das Korrosionsschutzmittel ein, dass man Oxide, Hydroxide oder Carbonate dieser Metalle mit Phosphorsäure umsetzt. Diese Oxide, Hydroxide oder Carbonate können also als basische Komponente dienen, um bei Anwesenheit von Phosphorsäure den pH-Wert auf den gewünschten Bereich einzustellen.

Weiterhin enthält das erfindungsgemäße Korrosionsschutzmittel vorzugsweise zusätzlich als Komponente f) mindestens eine zur Bildung von Chelatkomplexen befähigte organische Verbindung. Zur Bildung von Chelatkomplexen befähigte organische Verbindungen (Moleküle bzw. Ionen) sind beispielsweise Aminoalkylen-, insbesondere Aminomethylenphosphonsäuren, Phosphonocarbonsäuren, geminale Diphosphonsäuren und Phosphorsäureester sowie jeweils deren Salze. Ausgewählte Beispiele sind Phosphonobutantricarbonsäure, Aminotris-(methylenphosphonsäure), Diethylentriaminpenta(methylenphosphonsäure), (2-hydroxiethyl)aminobis(methylenphosphonsäure), Ethylendiamintetrakis-(methylenphos-phonsäure), Hexamethylendiamintetrakis(methylenphosphonsäure), (2-ethylhexyl)-aminobis(methylenphosphonsäure), n-Octylaminobis-(methylenphosphonsäure), Cyclohexan-1,2-diamintetrakis(methylenphosphonsäure), Pentaethylenhexaminoktakis-(methylenphosphonsäure), N,N-Bis(3-aminopropyl)aminohexakis(methylenphosphonsäure).

Weitere konkrete Beispiele sind:
1-Hydroxy-1 phenylmethan-1,1-diphosphonsäure
p-Hydroxyphenyl-1-aminomethan-1,1-diphosphonsäure
1-Hydroxyphenylmethan-1,1-d iphosphonsäure
1-Amino-1-phenylmethan-1,1-diphosphonsäure
4-Aminophenyl-1-hydroxymethan-1 ,1-diphosphonsäure
p-Aminophenyl-1-aminomethan-1,1-diphosphonsäure
p-Chlorphenylmethan -1,1-diphosphonsäure
1-Chlor-1-phenylmethan-1,1-diphosphonsäure
p-Chlorphenyl-1-hydroxymethan-1,1-diphosphonsäure
1-Chlorphenylmethan-1,1-diphosphonsäure
p-Chlorphenyl-1-Chlormethan-1,1-diphosphonsäure
4-Chlorphenyl-1-chlormethandiphosphonsäure
p-Hydroxyphenylaminomethylendiphosphonsäure
3,4-Dimethylphenyl-1-chlormethandiphosphonsäure
3,4-Dimethylphenyl-1-hydroxymethandiphosphonsäure
3,4-Dimethylphenylaminomethandiphosphonsäure
3,4-Dimethylphenyl-1-Chlormethan-1,1-diphosphonsäure
4-Dimethylaminophenyl-1-hydroxymethandiphosphonsäure
4-(N-Benzyl-N, N-dimethylamino)-phenyl-1 hydroxymethandiphosphonsäure
4-Trimethylaminophenyl-1-hydroxymethandiphosphonsäure
3,4,5-Trimethoxyphenyl-1-aminomethan-1,1-diphosphonsäure
1-Bis-(N-hydroxymethyl)-amino-1-phenylmethan-1 ,1-diphosphonsäure
3,5-Dichlor-4-hydroxyphenyl-hydroxymethandiphosphonsäure
3,5-Dibrom-4-hydroxyphenyl-aminomethandiphosphonsäure
1-Amino-1-cyclohexylmethan-1 ,1-diphosphonsäure
1-Hydroxy-1-cyclohexylmethan-1,1-diphosphonsäure
[4-(Aminomethyl)-cyclohexyl]-1-hydroxymethan-1,1-diphosphonsäure
N-(Hydroxymethyl)-1-aminoethan-1,1-diphosphonsäure
1,3-Diaminopropan -1,1-diphosphonsäure
3-Dimethylamino-1-aminopropan -1,1-diphosphonsäure
3-Monomethylamino-1-aminopropan-1,1-diphosphonsäure
3-(N-Dodecylamino)-1-aminopropan-1,1-diphosphonsäure
3-(N, N-Dodecylmethylamino)-1-aminopropan-1,1-diphosphonsäure
3-(N-Dimethyldodecylamino)-1-aminopropan-1,1-diphosphonsäure
2-Amino-2-methyl-1 -hydroxypropan-1,1-diphosphonsäure
3-Amino-1 -hydroxy-3-phenylpropan -1,1-diphosphonsäure
3-Amino-3-phenyl-1 -hydroxypropan-1, 1 -diphosphonsäure
3-Diethylamino-1-hydroxypropan-1,1-d iphosphonsäure
3-N, N-Dimethylamino-1 -hydroxypropan-1, 1 diphosphonsäure
3-N-bis-(hydroxyethyl)-amino-1-hydroxypropan-1,1-diphosphonsäure
3-(N-Dodecylamino)-1 -hydroxypropan-1, 1 -diphosphonsäure
1,3-Dihydroxy-3-phenylpropan-1,1-diphosphonsäure
3-Dimethylamino-1-hydroxypropan-1,1-diphosphonsäure
1,3-Dihydroxypropan-1,1-diphosphonsäure
1-Hydroxy-3-diethylaminopropan-1,1-diphosphonsäure
1,3-Dihydroxy-3-phenylpropan-1,1-diphosphonsäure
1,3-Diaminobutan-1,1-diphosphonsäure
1-Hydroxy-3-aminobutan -1,1-diphosphonsäure
3-Monoethylamino-1-aminobutan-1,1-diphosphonsäure
4-Amino-1-hydroxybutan-1,1-diphosphonsäure
4-N,N-Dimethylamino-1-hydroxybutan-1,1-diphosphonsäure
6-Amino-1-hydroxyhexan-1,1-diphosphonsäure
1,6-Dihydroxyhexan-1,1-diphosphonsäure
1,11-Dihydroxyundecan-1,1-diphosphonsäure
11-Amino-1-hydroxyundecan-1,1-diphosphonsäure
1,2-Diaminocyclohexantetrakis(methylenphosphonsäure)
Glucamin-bis(methylenphosphonsäure)
1-Ureidoethan-1,1-diphosphonsäure
Pyrimidyl-2-aminomethandiphosphonsäure
Pyridyl-2-aminomethylendiphosphonsäure
N,N'-Dimethylureidomethandiphosphonsäure
N-(2-Hydroxyethyl)ethylendiamin-N,N',N'-trismethylenphosphonsäure
Aminoessigsäure-N, N-dimethylenphosphonsäure
1,2-Diaminopropantetrakis(methylenphosphonsäure)
2-Hydroxypropan-1,3- diamintetrakis(methylenphosphonsäure)
5-Hydroxy-3-oxa-1-aminopentan-bis(methylenphosphonsäure)
Imino-bis(methylenphosphonsäure)
Y,Y-Diphosphono-N-methylbutyrolactam
Amidinomethylendiphosphonsäure
Formylaminomethandiphosphonsäure
2-Iminopiperidon-6,6-diphosphonsäure
2-Iminopyrrolidon-5,5-diphosphonsäure
N,N'-Dimethyliminopyrrolidon-5,5-diphosphonsäure
1-Methyl-2-pyrrolidon-5,5-diphosphonsäure
Aminodiessigsäure-N-Methylphosphonsäure
1,3-Dihydroxy-2-methylpropan-N,N-dimethylenphosphonsäure
1,2-Dihydroxypropan-3-amino-bis(methylenphosphonsäure)
2-Hydroxypropan-1,3-diamintetrakis(methylenphosphonsäure)
3,6-Dioxa-1,8-diaminooctan-tetrakis(methylenphosphonsäure)
1,5-Diaminopentantetrakis(methylenphosphonsäure)
Methylamino-dimethylenphosphonsäure
N-Hexylamino-dimethylenphosphonsäure
Decylamino-dimethylenphosphonsäure
3-Picolylaminodimethylenphosphonsäure
Methandiphosphonsäure
Dichlormethandiphosphonsäure
Dichlormethandiphosphonsäure-tetraisopropylester
1,1-Diphosphonethan-2carbonsäure
Ethan-1,1- diphosphonsäure
Ethan-1,1,2-triphosphonsäure
1,2-Diphosphonethan-1,2-dicarbonsäure
Ethan-1,1-2,2-tetraphosphonsäure
1-Phosphonoethan-1,2,2-tricarbonsäure
Phosphonoessigsäure
α-Chlor-α-phosphonoessigsäure
1-Phosphonopropan-2,3-dicarbonsäure
1-Phosphonopropan-1,2,3-tricarbonsäure
Propan-1,1,3,3-tetraphosphonsäuresäure
Aminomethandiphosphonsäure
Dimethylaminomethandiphosphonsäure
N-Decylaminomethan-1,1-diphosphonsäure
N-Decylaminomethandiphosphonsäure
N,N-Dimethylaminomethandiphosphonsäure
Dimethylaminomethandiphosphonsäure
1-Aminoethan-1,1-diphosphonsäure
1-Amino-2-chlorethan -1,1-diphosphonsäure
1-Amino-2-phenylethan-1,1-diphosphonsäure
1-Monomethylaminoethan-1,1-diphosphonsäure
N-Monohydroxymethylaminoethan-1,1-diphosphonsäure
1-Aminopropan-1,1-diphosphonsäure
1-Aminopropan-1,1,3-triphosphonsäure
1-Aminobutan-1,1 -diphosphonsäure
1-Aminohexan-1,1-diphosphonsäure
1-Aminodecan-1,1-diphosphonsäure
1-Aminohexadecan-1,1-diphosphonsäure
1-Hydroxy-3,6,9- trioxadecan-1,1-diphosphonsäure
Cocosalkylaminobis(methylenphosphonsäure)
4-Ethyl-4-methyl-3-oxo-1-aminohexan-1,1-diphosphonsäure
1-Hydroxy-3-oxo-4-ethyl-4-methylhexan-1,1-d iphosphonsäure
1-Amino-4-ethyl-4-methyl-3-oxohexan-1,1-diphosphonsäure
4-Ethyl-4-methyl-3-oxohex-1-en-1,1-diphosphonsäure
1-Amino-3-oxo-4,4-dimethylheptan-1,1-diphosphonsäure
1-Hydroxy-3-oxo-4,4-dimethylheptan-1,1-diphosphonsäure
4,4-Dimethyl-3-oxo-hept-1-en -1,1-diphosphonsäure
1-Amino-3-oxo-4,4-dimethyldecan-1,1-diphosphonsäure
N-Ethylamino-(phenylmethandiphosphonsäure)
1-Hydroxyethan-1,1-diphosphonsäure
2-[Benzimidazolyl-(2.2)-]-ethandiphosphonsäure
N-Carboxymethan-1-aminoethan-1,1-diphosphonsäure
1,5-Diaminopentan-1,1,5,5-tetraphosphonsäure
α-Octadecyl-phosphonobernsteinsäure
β-Trifluormethyl-α-phosphonobuttersäure
1-Decylpyrrolidon-2,2-diphosphonsäure
Pyrrolidon-5,5-diphosphonsäure
2,2-Diphosphono-N-decylpyrrolidon
γ,γ-Diphosphono-N-methylbutyrolactam
1,4-Thiazindioxid-N-methandiphosphonsäure
p-(1,4-Thiazindioxid)-N-phenyten-hydroxymethandiphosphonsäure
α-(1,4-Thiazindioxid)-N-ethan-α,α-diphosphonsäure
3-(1,4-Thiazindioxid)-N-1-hydroxypropan-1,1-diphosphonsäure
6-(1,4-Thiazindioxid)-N-1-hydroxyhexan-1,1-diphosphonsäure
11-(1,4-Thiazindioxid)-N-1-hydroxyundecan-1,1-diphosphonsäure
Azacyclopentan-2,2-diphosphonsäure
N-Methylazacyclopentan-2,2-diphosphonsäure
N-Decylazacyclopentan-2,2-diphosphonsäure
N-Tetradecylazacyclopentan-2,2-diphosphonsäure
Azacyclohexan-2,2-diphosphonsäure
1-(4,5-Dihydro-3H-pyrrol-2-yl-)-pyrrolidinyliden-2,2-diphosphonsäure
Hydroxymethandiphosphonsäure,
1-Oxaethan-1,2-diphosphonsäure
1-Hydroxypropan-1,1-diphosphonsäure
1-Hydroxybutan-1,1-diphosphonsäure
1-Hydroxypentan-1,1-diphosphonsäure
1-Hydroxyoctan-1,1-diphosphonsäure.

Weiterhin ist es bevorzugt, dass das Korrosionsschutzmittel als Komponente g) zusätzlich Molybdat- und/oder Wolframationen enthält. Vorzugsweise werden diese als Ammonium- oder Alkalisalze eingesetzt.

Weiterhin ist es bevorzugt, das das Korrosionsschutzmittel zusätzlich als Komponente h) mindestens ein Kation ausgewählt aus Zink-, Cobalt-, Nickel-, Vanadium- und Eisenionen enthält. Hiermit sind im Korrosionsschutzmittel gelöste Ionen gemeint und nicht solche Ionen, die als austauschbare Kationen im Korrosionsschutzpigment b) gebunden sind. Wie auch die weiter oben genannten Mangan- und/oder Magnesiumionen werden auch diese Kationen vorzugsweise als Phosphate eingebracht. Dies kann wiederum dadurch geschehen, dass man Oxide, Hydroxide oder Carbonate dieser Ionen mit Phosphorsäure umsetzt. Insbesondere enthält das Korrosionsschutzmittel vorzugsweise Zinkionen.

Weiterhin ist es bevorzugt, dass das Korrosionsschutzmittel als zusätzliche Komponente i) mindestens ein Reduktionsmittel ausgewählt aus Eisen(II)-Ionen und Hydroxylamin, Hydroxylammonium-Salzen oder Hydroxylamin-abspaltenden Verbindungen enthält. Dies gilt insbesondere dann, wenn das Korrosionsschutzmittel Mangan(II)-Ionen enthält.

Definitionsgemäß enthält das Korrosionsschutzmittel mindestens die Komponente a), b) und c). Jede einzelne weitere der fakultativen Komponenten d) bis i) verbessert bestimmte Eigenschaften im Eigenschaftsprofil des erfindungsgemäßen Korrosionsschutzmittels. Daher ist es besonders bevorzugt, dass das Korrosionsschutzmittel mindestens eine, vorzugsweise mindestens 2 und insbesondere mindestens 3 der fakultativen Komponenten d) bis i) enthält. Beispielsweise ist es besonders bevorzugt, dass das Korrosionsschutzmittel sowohl Phosphationen als auch Mangan- und/oder Magnesiumionen enthält. Weiterhin ist es bevorzugt, dass das Korrosionsschutzmittel gleichzeitig Phosphationen und mindestens eine zur Bildung von Chelatkomplexen befähigte organische Verbindung enthält. In einer weiteren bevorzugten Ausführungsform enthält das Korrosionsschutzmittel Mangan- und/oder Magnesiumionen und zusätzlich mindestens ein Kation ausgewählt aus Zink-, Cobalt-, Nickel-, Vanadium- und Eisenionen. Sofern Mangan(II)-Ionen anwesend sind, enthält das Korrosionsschutzmittel vorzugsweise zusätzlich ein Reduktionsmittel i).

In einer weiteren bevorzugten Ausführungsform enthält das Korrosionsschutzmittel mindestens eine der Komponenten d), e), f) und h) zusammen mit Molybdat- und/oder Wolframationen.

Ein besonders bevorzugtes Korrosionsschutzmittel enthält mindestens einen Vertreter von jeder der Komponenten d), e), f), g) und h).

Das organische Polymer c) enthält in einfacher Weise radikalisch polymerisierbare, ethylenisch ungesättigte Monomere.

Beispielsweise können folgende ethylenisch ungesättigte Monomere verwendet werden: vinylaromatische Monomere, wie Styrol und [alpha]-Methylstyrol, Ester aus vorzugsweise 3 bis 6 C-Atome aufweisenden [alpha],[beta]-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 C-Atome aufweisenden Alkanolen, wie besonders Acrylsäure- und Methacrylsäuremethyl-, -ethyl-, -n-butyl-, -isobutyl-, pentyl-, - hexyl-, -heptyl-, -octyl-, -nonyl-, -decyl- und -2-ethylhexylester, Fumar- und Maleinsäuredimethylester oder -di-n-butylester.

Weiterhin können auch Monomere mit mehreren ethylenisch ungesättigten Doppelbindungen eingesetzt werden. Beispiele sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat.

Das organische Polymer c) ist so aufgebaut, dass es mindestens zwei Monomere ausgewählt aus Acrylsäure, Methacrylsäure, Acrylsäureester und Methacrylsäureester enthält, wobei mindestens ein Monomer ausgewählt aus Acrylsäureester und Methacrylsäureester eingebunden ist.

Dabei tragen die Polymere Phosphorsäure- oder Phosphorsäureester-Gruppen. Der Anteil an Monomeren, die Phosphorsäure- oder Phosphorsäureester-Gruppen tragen, liegt im Polymer im Bereich von 0,5 bis 4, vorzugsweise im Bereich von 1 bis 2 Mol-%. Zusätzlich zu den Phosphorsäure- oder Phosphorsäureester-Gruppen ist im Polymer bevorzugt mindestens eine weitere Gruppe ausgewählt aus Epoxigruppen, Silangruppen, Carboxylgruppen und Hydroxygruppen vorhanden. Dabei kann der Gehalt an Hydroxygruppen im Polymer 0,5 bis 3,5 g/kg Polymer betragen. Ein besonders bevorzugtes Polymer enthält Phosphorsäure- oder Phosphorsäureestergruppen, Carboxylgruppen und Hydroxygruppen.

Weiterhin ist es bevorzugt, dass das Polymer außer Hydroxy-, Carboxyl-, Phosphorsäure- oder Phosphorsäureester-Gruppen zusätzlich Carbonsäureamid-Gruppen aufweist, wobei an das N-Atom der Carbonsäureamid-Gruppe mindestens ein Hydroxyalkyl-Rest, vorzugsweise mindestens ein HydroxymethylRest gebunden ist. Insbesondere sind Polymere bevorzugt, die Phosphorsäure- oder Phosphorsäureester-Gruppen und zusätzlich sowohl Hydroxy-Gruppen als auch Carboxyl-Gruppen als auch die genannten Carbonsäureamid-Gruppen aufweisen.

Beispiele für solche Monomere sind Methacrylsäure- und Acrylsäure-C1-C8-Hydroxyalkylester wie n-Hydroxyethyl-, n-Hydroxypropyl- oder n-Hydroxybutylacrylat und -methacrylat sowie Verbindungen, wie N-Methylolacrylamid, Glycidylmethacrylat und Phosphorsäureester von Hydroxyacrylaten und Hydroxymethacrylaten.

Ein Zusatz von zur Bildung von Chelatkomplexen befähigten organischen Verbindungen f) ist vor allem dann empfehlenswert, wenn das Polymer c) keine Silangruppen aufweist.

Außer diesem essentiellen Polymer c) können zusätzlich weitere Polymere vorhanden sein, die insbesondere die Aufgabe haben, die Kompatibilität mit speziellen Decklacken zu verbessern. Beispiele sind weitere Polymere mit OH-Gruppen sowie Polymere vom Typ der Polyurethane, der Polyester und der Epoxide. Der Mengenanteil dieser zusätzlichen Polymere relativ zum Gesamtgehalt des Korrosionsschutzmittels an Polymeren kann beispielsweise 1 bis 20 Gew.-% betragen.

Zusätzlich kann das Korrosionsschutzmittel dispergierend wirkende Additive enthalten, wie sie beispielsweise zur Anreibung von Pigmentpasten zur Lackherstellung bekannt sind.

Vorzugsweise enthält das Korrosionsschutzmittel im anwendungsfertigen Zustand die Komponenten in folgenden Anteilen in Gew.-% bezogen auf das gesamte Korrosionsschutzmittel:
Wasser: 25 bis 69,7 Gew.-%,
   a) Fluorokomplexionen von Titan und/oder Zirkon, als Hexafluorotitan- bzw. Hexafluorozirkonsäure berechnet: insgesamt 0,3 bis 3 Gew.-%, vorzugsweise 0,5 bis 2 Gew.-%,
   b) Korrosionsschutzpigment(e): insgesamt
      5 bis 25 Gew.-%, vorzugsweise insgesamt 10 bis 20 Gew.-%,
   c) im genannten pH-Bereich wasserlösliches oder wasserdispergierbares organisches Polymer, das als solches in wässriger Lösung bei einer Konzentration von 50 Gew.-% einen pH-Wert im Bereich von 1 bis 3 aufweist: 25 bis 50 Gew.-%, vorzugsweise 30 bis 40 Gew.-%,
   d) Phosphationen, berechnet als Phosphorsäure: 0 bis 5 Gew.-%, vorzugsweise 0,5 bis 4 Gew.-%,
   e) Mangan- und/oder Magnesiumionen: insgesamt 0 bis 2 Gew.-%, vorzugsweise 0,1 bis 1 Gew.-%,
   f) zur Bildung von Chelatkomplexen befähigte organische Verbindung(en): insgesamt 0 bis 5 Gew.-%, vorzugsweise 0,5 bis 3 Gew.-%,
   g) Molybdat- und/oder Wolframationen, als Ammoniumsalz berechnet: insgesamt 0 bis 1 Gew.-%, vorzugsweise 0,05 bis 0,5 Gew.-%,
   h) Kationen ausgewählt aus Zink-, Cobalt-, Nickel-, Vanadium- und Eisenionen: insgesamt 0 bis 1 Gew.-%, vorzugsweise 0,1 bis 0,5 Gew.-%,
   i) Reduktionsmittel ausgewählt aus Eisen(II)-lonen und Hydroxylamin, Hydroxylammonium-Salzen oder Hydroxylamin-abspaltenden Verbindungen: insgesamt 0 bis 0,1 Gew.-%, vorzugsweise 0,005 bis 0,05 Gew.-%.

Zusätzlich zu diesen Komponenten können weitere Wirk- oder Hilfsstoffe vorhanden sein, beispielsweise die weiter oben genannten zusätzlichen Polymere und/oder dispergierend wirkende Additive. Selbstverständlich sind die Anteile der einzelnen Komponenten so zu wählen, dass sie sich zu 100 % addieren. Dies gilt auch, wenn außer den genannten Komponenten a) bis i) weitere Komponenten vorhanden sind. In einer bevorzugten Ausführungsform enthält das Korrosionsschutzmittel ausschließlich Wasser sowie die Komponenten a) bis c) und eine oder mehrere der Komponenten d) bis i), allenfalls ergänzt durch die vorstehend genannten zusätzlichen Polymere und Additive. Dabei ist zu beachten, dass zu den genannten ionischen Komponenten entsprechende Gegenionen vorhanden sein müssen. Beispielsweise werden die Molybdat- und/oder Wolframationen vorzugsweise als Ammonium- oder Alkalimetallsalze eingesetzt. Insgesamt ist es jedoch bevorzugt, dass das Korrosionsschutzmittel außer den als Anionen vorliegenden Fluorokomplexen a), den anionischen Gruppen im Korrosionsschutzpigment b) und im Polymer c), den Phosphationen d) sowie ggf. den Anionen der zur Bildung von Chelatkomplexen befähigten organischen Verbindungen f) keine weiteren Anionen enthält. Diese Bedingung stellt sicher, dass nach Aufbringen und Aushärten des Korrosionsschutzmittels in der Beschichtung keine Salze verbleiben, die in Wasser leicht löslich sind und die die Korrosionsschutzwirkung schwächen.

Insbesondere soll das erfindungsgemäße Korrosionsschutzmittel möglichst wenig organische Verbindungen wie beispielsweise organische Lösungsmittel enthalten, die unter den Bedingungen des Einbrennens flüchtig sind und die als "volatile organic carbon, VOC" in die Umgebungsluft gelangen. Demgemäß ist es bevorzugt, dass das Korrosionsschutzmittel nicht mehr als 5 Gew.-%, vorzugsweise nicht mehr als 2 Gew.-% und insbesondere nicht mehr 0,5 Gew.-% an organischen Verbindungen enthält, die bei Atmosphärendruck einen Siedepunkt von unterhalb 150 °C bis max. 150 °C haben.

Aus Gründen der breiten Anwendbarkeit, der Produktionsgeschwindigkeit und des Energieverbrauchs ist es wünschenswert, das metallische Substrat mit dem aufgetragenen Korrosionsschutzmittel bei einer Temperatur von nicht mehr als 150 °C auszuhärten. Demnach weist das organische Polymer c) vorzugsweise die Eigenschaft auf, dass es bei einer Temperatur von nicht mehr als 150 °C, vorzugsweise nicht mehr als 100 °C innerhalb von nicht mehr als 60 Sekunden, vorzugsweise nicht mehr als 30 Sekunden aushärtbar ist. Die genannten Temperaturen sind dabei die Substrattemperaturen des Metallsubstrats mit dem aufgetragenen Korrosionsschutzmittel.

Die vorstehend beschriebene Zusammensetzung stellt das Korrosionsschutzmittel in anwendungsfertiger Form dar, in der es mit dem Metallsubstrat in Kontakt gebracht werden kann. In dieser Form kann es je nach konkreter Zusammensetzung eine begrenzte zeitliche Stabilität aufweisen, d. h. mit der Zeit kann eine Niederschlagsbildung oder eine Vergelung eintreten. In der Regel ist das anwendungsfertige Korrosionsschutzmittel jedoch hinreichend lange stabil, um im Produktionsprozess eingesetzt werden zu können. Die sogenannte "Topfzeit", innerhalb derer das anwendungsfertige Korrosionsschutzmittel verarbeitet, d.h. auf das Metallsubstrat aufgetragen werden muss, beträgt in der Regel mindestens 12 Stunden, vorzugsweise mindestens 24 Stunden und insbesondere mindestens 7 Tage. Einen wesentlichen Beitrag zu dieser Stabilität leistet die besondere Auswahl des Polymers c), wie es vorstehend beschrieben wurde. Dispergierend wirkende Additive können sich ebenfalls positiv auswirken.

Mehrere Wochen oder Monate lang ist das Korrosionsschutzmittel jedoch in der Regel nicht lagerfähig. Daher wird es vorzugsweise in Form von mindestens 2 getrennten Lösungen bzw. Dispersionen ausgeliefert und bevorratet, die erst dann miteinander vermischt werden, wenn sie innerhalb der vorstehend genannten Topfzeit verarbeitet werden sollen. Dabei ist es besonders bevorzugt, dass die erste Lösung bzw. Dispersion das Korrosionsschutzpigment b), dispergiert in Wasser, enthält, vorzugsweise zusammen mit mindestens einem dispergierend wirkenden Additiv, wie es beispielsweise zur Anreibung von Pigmentpasten zur Lackherstellung bekannt ist. Diese Lösung bzw. Dispersion enthält dann vorzugsweise kein Polymer c). Die zweite Lösung bzw. Dispersion enthält das Polymer c). Die Komponente a) und gegebenenfalls die eine oder mehrere der Komponenten d) bis i) können in der ersten oder in der zweiten Lösung bzw. Dispersion vorhanden sein. Bevorzugt ist es dabei, wenn sich diese Komponenten in der zweiten, polymerhaltigen, Lösung bzw. Dispersion befinden.

Dem Fachmann ist geläufig, dass die vorstehend genannten Komponenten, insbesondere die anorganischen Verbindungen, Reaktionen miteinander eingehen können, so dass sie in der Behandlungslösung in der Form vorliegen, die unter den genannten Bedingungen für den pH-Wert stabil sind. Beispielsweise werden die Fluorokomplexionen teilweise in Form der freien Säure vorliegen.

In einem weiteren Aspekt betrifft die vorliegende Erfindung ein Verfahren zur Beschichtung von Metallband, dadurch gekennzeichnet, dass man ein Korrosionsschutzmittel wie vorstehend beschrieben in einer solchen Schichtdicke auf das laufende Metallband aufbringt und durch Erwärmen des Metallbands auf eine Temperatur von maximal 150 °C, vorzugsweise von maximal 100 °C für eine Zeitdauer von maximal 60 Sekunden, vorzugsweise von maximal 30 Sekunden aushärtet, dass man nach dem Aushärten eine Schicht mit einer Dicke im Bereich von 0,5 bis 10 µm, vorzugsweise 1 bis 5 µm enthält.

Bei Anwendung insbesondere auf Metallbandoberflächen wird die Anwendungslösung in an sich bekannter Weise durch Walzenapplikation (Chem-Coating), Abstreifen, Tauchen/Abquetschen oder Spritzen/Abquetschen auf ein Metallband aufgebracht. Die Anwendung erfolgt vorzugsweise bei Temperaturen zwischen 10 und 50°C, insbesondere zwischen 15 und 35 °C. Die Temperatur kann durch Wärmezufuhr über das Werkstück oder die Behandlungslösung eingestellt werden. Anschließend findet durch geeignete Wärmezuführung gleichzeitig die Bildung eines Films und die Vernetzung dieses Films sowie die Verankerung auf der metallischen Oberfläche statt. Hierzu sind während einer Zeitdauer zwischen 1 und 60 Sekunden, vorzugsweise zwischen 1 und 30 Sekunden, Peak-Metal-Temperaturen (PMT) von 50 bis 150°C, vorzugsweise von 60 bis 100 °C zu erreichen.

Die Beschichtung mit dem erfindungsgemäßen Korrosionsschutzmittel stellt die erste Korrosionsschutzmaßnahme dar. Dies heißt, dass man entweder eine frisch erzeugte oder eine frisch gereinigte Metalloberfläche, die noch keiner Korrosionsschutzmaßnahme unterzogen wurde, mit dem erfindungsgemäßen Korrosionsschutzmittel in Kontakt bringt und das Korrosionsschutzmittel aushärtet. Man erhält so eine Metalloberfläche, die eine Basis-Korrosionsschutzbeschichtung aufweist. In dieser Form kann das Metallband gelagert und/oder versandt werden. Es kann weiterhin in Teile geschnitten und ggf. umgeformt und mit weiteren Teilen zu Baueinheiten zusammengefügt werden. Mit dem erfindungsgemäßen Korrosionsschutzmittel beschichtete Metalloberflächen können also in den Handel kommen und weiter verarbeitet werden, ohne dass auf das Korrosionsschutzmittel eine weitere Beschichtung aufgebracht wurde. Je nach letztem Verwendungszweck kann das Aufbringen weiterer dekorativer Beschichtungen oder Korrosionsschutzbeschichtungen erst nach Herstellung des endgültigen Metallgegenstands erfolgen.

Alternativ hierzu kann das mit dem erfindungsgemäßen Korrosionsschutzmittel beschichtete Metallband oder hieraus geschnittene Metallbleche mit mindestens einer weiteren dekorativen Beschichtung oder Korrosionsschutzbeschichtung wie beispielsweise mit einem Lack überbeschichtet werden, bevor diese Metallbänder oder Metallbleche in den Handel kommen und/oder zu Bauteilen weiter verarbeitet werden. In diesem Fall hat das erfindungsgemäße Korrosionsschutzmittel die Funktion eines sogenannten Primers.

Das erfindungsgemäße Verfahren ist insbesondere geeignet zur Beschichtung von Metallbänder, die ausgewählt sind aus Bänder von Zink oder Zinklegierungen, Aluminium oder Aluminiumlegierungen sowie aus Stahlbändern, die mit Zink oder Zinklegierungen oder mit Aluminium oder Aluminiumlegierungen beschichtet sind. Dabei sind unter "Zinklegierungen" bzw. "Aluminiumlegierungen" solche Legierungen zu verstehen, die zu mehr als 50 Atom-% aus Zink bzw. Aluminium bestehen. Mit Zink oder Zinklegierungen beschichtete Stahlbänder können entweder elektrolytisch oder im Schmelztauchverfahren mit Zink bzw. Zinklegierungen beschichtet worden sein. Dabei können die auf Stahlband abgeschiedenen Zinklegierungen reich an Aluminium bzw. die abgeschiedenen Aluminiumlegierungen reich an Zink sein. Derartige beschichtete Stahlbänder sind am Markt unter den Bezeichnungen Galfan^{R} oder Galvalume^{R} bekannt.

Schließlich betrifft die Erfindung in einem dritten Aspekt ein beschichtetes Metallband oder ein hieraus abgeteiltes Metallblech, das ggf. umgeformt sein kann, das eine Beschichtung aufweist, wie sie nach dem erfindungsgemäßen Verfahren erhältlich ist. Auch hierbei sind Metallbänder oder hieraus abgeteiltes Metallblech aus den vorstehend aufgezählten Materialien bevorzugt. Entsprechend den Ausführungen zu dem erfindungsgemäßen Verfahren kann das beschichtete Metallband oder das hieraus abgeteilte Metallblech, ggf. zu einem Baukörper umgeformt, als einzige korrosionsschützende Beschichtung diejenige Beschichtung aufweisen, die nach dem erfindungsgemäßen Verfahren erhältlich ist. In diesem Falle ist die erfindungsgemäße Beschichtung also nicht mit einer weiteren dekorativen oder korrosionsschützenden weiteren Schicht überbeschichtet. Die Erfindung betrifft jedoch auch beschichtetes Metallband oder hieraus abgeteiltes Metallblech, das ggf. zu Bauteilen umgeformt sein kann und das über der nach dem erfindungsgemäßen Verfahren erhältlichen ersten Beschichtung mindestens eine weitere dekorative oder korrosionsschützende Beschichtung trägt.

## Patentansprüche

1. Chromfreies, härtbares Korrosionsschutzmittel zur Erstbeschichtung von metallischen Substraten, das einen pH-Wert im Bereich von 1 bis 3 aufweist, enthaltend Wasser und
a) Fluorokomplexionen von Titan und/oder Zirkon,
b) mindestens ein Korrosionsschutzpigment,
c) mindestens ein im genannten pH-Bereich wasserlösliches oder wasserdispergierbares organisches Polymer, das als solches in wässriger Lösung bei einer Konzentration von 50 Gew.-% einen pH-Wert im Bereich von 1 bis 3 aufweist, **dadurch gekennzeichnet, dass** das organische Polymer c)
i) mindestens zwei unterschiedliche radikalisch polymerisierbare, ethylenisch ungesättigte Monomere ausgewählt aus Acrylsäure, Methacrylsäure, Acrylsäureester und Methacrylsäureester enthält, wobei mindestens ein Monomer ausgewählt aus Acrylsäureester und Methacrylsäureester eingebunden ist, und
ii) einen Anteil an Monomeren, die Phosphorsäure- oder Phosphorsäureester-Gruppen tragen, im Polymer im Bereich von 0,5 bis 4 Mol-% aufweist.

2. Korrosionsschutzmittel nach Anspruch 1, **dadurch gekennzeichnet, dass** es zusätzlich
d) Phosphationen enthält

3. Korrosionsschutzmittel nach Anspruch 1 oder 2, **dadurch gekennzeichnet, dass** es zusätzlich
e) Mangan- und/oder Magnesiumionen enthält.

4. Korrosionsschutzmittel nach einem oder mehreren der Ansprüche 1 bis 3, **dadurch gekennzeichnet, dass** es zusätzlich
f) mindestens eine zur Bildung von Chelatkomplexen befähigte organische Verbindung enthält.

5. Korrosionsschutzmittel nach einem oder mehreren der Ansprüche 1 bis 4, **dadurch gekennzeichnet, dass** es zusätzlich
g) Molybdat- und/oder Wolframationen enthält.

6. Korrosionsschutzmittel nach einem oder mehreren der Ansprüche 1 bis 5, **dadurch gekennzeichnet, dass** es zusätzlich
h) mindestens ein Kation ausgewählt aus Zink-, Cobalt-, Nickel-, Vanadium- und Eisenionen enthält.

7. Korrosionsschutzmittel nach einem oder mehreren der Ansprüche 1 bis 6, **dadurch gekennzeichnet, dass** es zusätzlich
i) mindestens ein Reduktionsmittel ausgewählt aus Eisen(II)-Ionen und Hydroxylamin, Hydroxylammonium-Salzen oder Hydroxylamin-abspaltenden Verbindungen enthält.

8. Korrosionsschutzmittel nach einem oder mehreren der Ansprüche 1 bis 7, **dadurch gekennzeichnet, dass** das Korrosionsschutzpigment b) Kationenaustauscher-Eigenschaften hat.

9. Korrosionsschutzmittel nach einem oder mehreren der Ansprüche 1 bis 8, **dadurch gekennzeichnet, dass** der Anteil an Monomeren, die Phosphorsäure- oder Phosphorsäureester-Gruppen tragen, im Polymer im Bereich von 1 bis 2 Mol-% liegt.

10. Korrosionsschutzmittel nach einem oder mehreren der Ansprüche 1 bis 9, **dadurch gekennzeichnet, dass** das organische Polymer c) zusätzlich zu Phosphorsäure- oder Phosphorsäureester-Gruppen mindestens eine weitere Gruppe ausgewählt aus Epoxigruppen, Silangruppen, Carboxylgruppen und Hydroxygruppen aufweist.

11. Korrosionsschutzmittel nach einem oder mehreren der Ansprüche 1 bis 10, **dadurch gekennzeichnet, dass** das Polymer zusätzlich Carbonsäureamidgruppen aufweist, wobei an das N-Atom der Carbonsäureamidgruppe mindesten ein Hydroxyalkylrest, vorzugsweise mindestens ein Hydroxymethylrest, gebunden ist.

12. Korrosionsschutzmittel nach einem oder mehreren der Ansprüche 1 bis 11, **dadurch gekennzeichnet, dass** es im anwendungsfertigen Zustand die Komponenten in folgenden Anteilen in Gew.-% bezogen auf das gesamte Korrosionsschutzmittel enthält:
Wasser: 25 bis 69,7 Gew.-%,
a) Fluorokomplexionen von Titan und/oder Zirkon, als Hexafluorotitan- bzw. Hexafluorozirkonsäure berechnet: insgesamt 0,3 bis 3 Gew.-%, vorzugsweise 0,5 bis 2 Gew.-%,
b) Korrosionsschutzpigment(e): insgesamt 5 bis 25 Gew.-%, vorzugsweise insgesamt 10 bis 20 Gew.-%,
c) im genannten pH-Bereich wasserlösliches oder wasserdispergierbares organisches Polymer, das als solches in wässriger Lösung bei einer Konzentration von 50 Gew.-% einen pH-Wert im Bereich von 1 bis 3 aufweist: 25 bis 50 Gew.-%, vorzugsweise 30 bis 40 Gew.-%,
d) Phosphationen, berechnet als Phosphorsäure: 0 bis 5 Gew.-%, vorzugsweise 0,5 bis 4 Gew.-%,
e) Mangan- und/oder Magnesiumionen: insgesamt 0 bis 2 Gew.-%, vorzugsweise 0,1 bis 1 Gew.-%,
f) zur Bildung von Chelatkomplexen befähigte organische Verbindung(en): insgesamt 0 bis 5 Gew.-%, vorzugsweise 0,5 bis 3 Gew.-%,
g) Molybdat- und/oder Wolframationen, als Ammoniumsalz berechnet: insgesamt 0 bis 1 Gew.-%, vorzugsweise 0,05 bis 0,5 Gew.%,
h) Kationen ausgewählt aus Zink-, Cobalt-, Nickel-, Vanadium- und Eisenionen: insgesamt 0 bis 1 Gew.%, vorzugsweise 0,1 bis 0,5 Gew.-%,
i) Reduktionsmittel ausgewählt aus Eisen(II)-Ionen und Hydroxylamin, Hydroxylammonium-Salzen oder Hydroxylamin-abspaltenden Verbindungen: insgesamt 0 bis 0,1 Gew.-%, vorzugsweise 0,005 bis 0,05 Gew.-%.

13. Korrosionsschutzmittel nach einem oder mehreren der Ansprüche 1 bis 12, **dadurch gekennzeichnet, dass** es nicht mehr als 5 Gew.-%, vorzugsweise nicht mehr als 2 Gew.-% und insbesondere nicht mehr als 0,5 Gew.-% an organischen Verbindungen enthält, die bei Atmosphärendruck einen Siedepunkt von höchstens 150 °C haben.

14. Verfahren zur Beschichtung von Metallband, **dadurch gekennzeichnet, dass** man ein Korrosionsschutzmittel nach einem oder mehreren der Ansprüche 1 bis 13 in einer solchen Schichtdicke auf das laufende Metallband aufbringt und durch Erwärmen des Metallbands auf eine Temperatur von 50°C bis 150°C vorzugsweise 60°C bis 100°C für eine Zeitdauer von maximal 60 Sekunden, vorzugsweise von maximal 30 Sekunden aushärtet, dass man nach dem Aushärten eine Schicht mit einer Dicke im Bereich von 0,5 bis 10 µm, vorzugsweise 1 bis 5 µm enthält.

15. Verfahren nach Anspruch 14, **dadurch gekennzeichnet, dass** die Metallband-Oberfläche vor dem Aufbringen des Korrosionsschutzmittels nach einem oder mehreren der Ansprüche 1 bis 13 keiner anderen Korrosionsschutzbehandlung unterzogen wird.

## Claims

1. Chromium-free, curable corrosion protection composition for the initial coating of metal substrates, said composition having a pH in the range 1 to 3, comprising water and
a) fluoro complex ions of titanium and/or zirconium,
b) at least one corrosion protection pigment,
c) at least one organic polymer that is water-soluble or water-dispersible in the cited pH range and which, as such in aqueous solution at a concentration of 50 wt %, exhibits a pH in the range 1 to 3, **characterised in that** the organic polymer c)
(i) comprises at least two different radically polymerisable, ethylenically unsaturated monomers selected from acrylic acid, methacrylic acid, acrylic acid esters and methacrylic acid esters, wherein at least one monomer selected from acrylic acid esters and methacrylic acid esters is incorporated, and
(ii) possesses a fraction of monomers that carry phosphoric acid groups or phosphoric acid ester groups in the polymer in the range 0.5 to 4 mol %.

2. Corrosion protection composition according to claim 1, **characterised in that** it additionally comprises
d) phosphate ions.

3. Corrosion protection composition according to claim 1 or 2, **characterised in that** it additionally comprises
e) manganese ions and/or magnesium ions.

4. Corrosion protection composition according to one or more of the claims 1 to 3, **characterised in that** it additionally comprises
f) at least one organic compound that is capable of forming chelate complexes.

5. Corrosion protection composition according to one or more of the claims 1 to 4, **characterised in that** it additionally comprises
g) molybdate ions and/or tungstate ions.

6. Corrosion protection composition according to one or more of the claims 1 to 5, **characterised in that** it additionally comprises
h) at least one cation selected from zinc, cobalt, nickel, vanadium and iron ions.

7. Corrosion protection composition according to one or more of the claims 1 to 6, **characterised in that** it additionally comprises
i) at least one reducing agent selected from iron (II) ions and hydroxylamine, hydroxyl ammonium salts or compounds that can split off hydroxylamine.

8. Corrosion protection composition according to one or more of the claims 1 to 7, **characterised in that** the corrosion protective pigment b) has cation-exchange properties.

9. Corrosion protection composition according to one or more of the claims 1 to 8, **characterised in that** the fraction of monomers that carry phosphoric acid groups or phosphoric acid ester groups in the polymer is in the range of 1 to 2 mol %.

10. Corrosion protection composition according to one or more of the claims 1 to 9, **characterised in that** the organic polymer c) exhibits, in addition to phosphoric acid groups or phosphoric acid ester groups, at least one further group selected from epoxy groups, silane groups, carboxyl groups and hydroxyl groups.

11. Corrosion protection composition according to one or more of the claims 1 to 10, **characterised in that** the polymer further exhibits carboxylic acid amide groups, wherein at least one hydroxyalkyl group, preferably at least one hydroxymethyl group, is bonded to the nitrogen atom of the carboxylic acid amide group.

12. Corrosion protection composition according to one or more of the claims 1 to 11, **characterised in that** it comprises, in the ready-for-use state, the components in the following proportions in wt % based on the total corrosion protection composition:
water: 25 to 69.7 wt %,
a) fluoro complex ions of titanium and/or zirconium, calculated as hexafluoro titanic acid or hexafluoro zirconic acid: in total, 0.3 to 3 wt %, preferably 0.5 to 2 wt %,
b) corrosion protection pigment(s): in total, 5 to 25 wt %, preferably 10 to 20 wt %,
c) organic polymer that is water-soluble or water-dispersible in the cited pH range and which, as such in aqueous solution at a concentration of 50 wt %, exhibits a pH in the range 1 to 3: 25 to 50 wt %, preferably 30 to 40 wt %,
d) phosphate ions, calculated as phosphoric acid: 0 to 5 wt %, preferably 0.5 to 4 wt %,
e) manganese ions and/or magnesium ions: in total 0 to 2 wt %, preferably 0.1 to 1 wt %,
f) organic compound(s) that is (are) capable of forming chelate complexes: in total 0 to 5 wt %, preferably 0.5 to 3 wt %,
g) molybdate ions and/or tungstate ions, calculated as the ammonium salt: in total 0 to 1 wt %, preferably 0.05 to 0.5 wt%,
h) cations selected from zinc, cobalt, nickel, vanadium and iron ions: in total 0 to 1 wt %, preferably 0.1 to 0.5 wt %,
i) reducing agents selected from iron (II) ions and hydroxylamine, hydroxyl ammonium salts or compounds that can split off hydroxylamine: in total, 0 to 0.1 wt %, preferably 0.005 to 0.05 wt %.

13. Corrosion protection composition according to one or more of the claims 1 to 12, **characterised in that** it comprises not more than 5 wt %, preferably not more than 2 wt % and especially not more than 0.5 wt % of organic compounds that have a maximum boiling point of 150 °C at atmospheric pressure.

14. Process for coating metal strips, **characterised in that** a corrosion protection composition according to one or more of the claims 1 to 13 is applied in such a thickness onto the running metal strip and is cured by heating the metal strip to a temperature of 50 °C to 150 °C, preferably 60 °C to 100 °C for a period of maximum 60 seconds, preferably for maximum 30 seconds, such that a layer with a thickness of 0.5 to 10 µm, preferably 1 to 5 µm is obtained after curing.

15. Process according to claim 14, **characterised in that** the surface of the metal strip is not subjected to any other corrosion protection treatment prior to the application of the corrosion protection composition according to one or more of the claims 1 to 13.

## Revendications

1. Agent anticorrosion durcissable exempt de chrome pour l'enduction primaire de substrats métalliques, qui présente une valeur de pH dans la plage de 1 à 3, contenant de l'eau et
a) des ions de fluorocomplexes de titane et/ou de zirconium ;
b) au moins un pigment anticorrosion ;
c) au moins un polymère organique soluble dans l'eau ou apte à être dispersé dans l'eau dans la plage de pH mentionnée, qui présente comme tel, en solution aqueuse, à une concentration de 50 % en poids, une valeur de pH dans la plage de 1 à 3, **caractérisé en ce que** le polymère organique c)
i) contient au moins deux monomères différents à insaturation éthylénique, aptes à une polymérisation radicalaire, choisis parmi l'acide acrylique, l'acide méthacrylique, des esters d'acide acrylique et des esters d'acide méthacrylique, au moins un monomère choisi parmi des esters d'acide acrylique et des esters d'acide méthacrylique étant intégré ; et
ii) présente une fraction de monomères qui portent des groupes d'acide phosphorique ou d'ester d'acide phosphorique, dans le polymère dans la plage de 0,5 à 4 moles %.

2. Agent anticorrosion selon la revendication 1, **caractérisé en ce qu'**il contient en outre :
d) des ions de phosphate.

3. Agent anticorrosion selon la revendication 1 ou 2, **caractérisé en ce qu'**il contient en outre :
e) des ions de manganèse et/ou de magnésium.

4. Agent anticorrosion selon une ou plusieurs des revendications 1 à 3, **caractérisé en ce qu'**il contient en outre :
f) au moins un composé organique capable de former des complexes chélatés.

5. Agent anticorrosion selon une ou plusieurs des revendications 1 à 4, **caractérisé en ce qu'**il contient en outre :
g) des ions de molybdate et/ou de tungstate.

6. Agent anticorrosion selon une ou plusieurs des revendications 1 à 5, **caractérisé en ce qu'**il contient en outre :
h) au moins un cation choisi parmi des ions de zinc, de cobalt, de nickel, de vanadium et de fer.

7. Agent anticorrosion selon une ou plusieurs des revendications 1 à 6, **caractérisé en ce qu'**il contient en outre :
i) au moins un agent de réduction choisi parmi des ions de fer(II) et l'hydroxylamine, des sels d'hydroxylammonium ou des composés libérant de l'hydroxylamine.

8. Agent anticorrosion selon une ou plusieurs des revendications 1 à 7, **caractérisé en ce que** le pigment anticorrosion b) possède des propriétés d'échange de cations.

9. Agent anticorrosion selon une ou plusieurs des revendications 1 à 8, **caractérisé en ce que** la fraction des monomères qui portent des groupes d'acide phosphorique ou d'ester d'acide phosphorique, est présente dans le polymère dans la plage de 1 à 2 moles %.

10. Agent anticorrosion selon une ou plusieurs des revendications 1 à 9, **caractérisé en ce que** le polymère organique c) présente, en plus des groupes d'acide phosphorique ou des groupes d'ester d'acide phosphorique, au moins un groupe supplémentaire choisi parmi des groupes époxy, des groupes silanes, des groupes carboxyle et des groupes hydroxyle.

11. Agent anticorrosion selon une ou plusieurs des revendications 1 à 10, **caractérisé en ce que** le polymère présente en outre des groupes d'amides d'acides carboxyliques, au moins un résidu hydroxyalkyle, de préférence au moins un résidu hydroxyméthyle étant lié à l'atome d'azote du groupe d'amide d'acide carboxylique.

12. Agent anticorrosion selon une ou plusieurs des revendications 1 à 11, **caractérisé en ce qu'**il contient, à l'état prêt à l'emploi, les composants dans les fractions suivantes en % en poids, rapportés à l'agent anticorrosion total :
de l'eau : de 25 à 69,7 % en poids ;
a) des ions de fluorocomplexes de titane et/ou de zirconium, calculés comme acide hexafluorotitanique, respectivement comme acide hexafluorozirconique : au total de 0,3 à 3 % en poids, de préférence de 0,5 à 2 % en poids ;
b) un ou plusieurs pigments anticorrosion : au total de 5 à 25 % en poids, de préférence au total de 10 à 20 % en poids ;
c) un polymère organique soluble dans l'eau ou apte à être dispersé dans l'eau dans la plage de pH mentionnée, qui présente comme tel, en solution aqueuse, à une concentration de 50 % en poids, une valeur de pH dans la plage de 1 à 3 : de 25 à 50 % en poids, de préférence de 30 à 40 % en poids ;
d) des ions de phosphate, calculés comme acide phosphorique : de 0 à 5 % en poids, de préférence de 0,5 à 4 % en poids ;
e) des ions de manganèse et/ou de magnésium : au total de 0 à 2 % en poids, de préférence de 0,1 à 1 % en poids ;
f) un ou plusieurs composés organiques capables de former des complexes chélatés : au total de 0 à 5 % en poids, de préférence de 0,5 à 3 % en poids ;
g) des ions de molybdate et/ou de tungstate, calculés comme sel d'ammonium : au total de 0 à 1 % en poids, de préférence de 0,05 à 0,5 % en poids ;
h) des cations choisis parmi des ions de zinc, de cobalt, de nickel, de vanadium et de fer : au total de 0 à 1 % en poids, de préférence de 0,1 à 0,5 % en poids ;
i) des agents de réduction choisis parmi des ions de fer(II) et l'hydroxylamine, des sels d'hydroxylammonium ou des composés libérant de l'hydroxylamine : au total de 0 à 0,1 % en poids, de préférence de 0,005 à 0,05 % en poids.

13. Agent anticorrosion selon une ou plusieurs des revendications 1 à 12, **caractérisé en ce qu'**il ne contient pas plus de 5 % en poids, de préférence pas plus de 2 % en poids et en particulier pas plus de 0,5 % en poids de composés organiques qui possèdent, sous pression atmosphérique, un point d'ébullition maximal de 150 °C.

14. Procédé pour l'enduction d'un ruban métallique, **caractérisé en ce qu'**on applique un agent anticorrosion selon une ou plusieurs des revendications 1 à 13 avec une épaisseur de couche sur le ruban métallique qui défile et par chauffage du ruban métallique à une température de 50 °C à 150 °C de préférence de 60 °C à 100 °C pendant un laps de temps maximal de 60 secondes, de préférence un laps de temps maximal de 30 secondes, de telle sorte qu'après durcissement, on obtient une couche dont l'épaisseur se situe dans la plage de 0,5 à 10 µm, de préférence de 1 à 5 µm.

15. Procédé selon la revendication 14, **caractérisé en ce que** la surface du ruban métallique n'est soumise à aucun autre traitement d'anticorrosion avant l'application de l'agent anticorrosion selon une ou plusieurs des revendications 1 à 13.
